# EUROPEAN PATENT SPECIFICATION

(11) **EP 3 798 459 B1**
(45) Date of publication and mention of the grant of the patent: **27.12.2023**
(21) Application number: 19807569.9
(22) Date of filing: 12.04.2019
(51) Int. Cl.: C10M 103/02, C10M 103/06, C23C 8/22, C23C 8/30, C23C 8/50, F16D 1/10

(54) **SLIDING SPLINE SHAFT DEVICE**
SCHIEBEKEILWELLENVORRICHTUNG
DISPOSITIF ARBRE CANNELÉ COULISSANT

(30) Priority: 23.05.2018 JP 2018098939
(43) Date of publication of application: 31.03.2021
(73) Proprietor: NISSAN MOTOR CO., LTD., Yokohama-shi, Kanagawa 221-0023 (JP); NIHON PARKERIZING CO., LTD., Chuo-ku Tokyo 103-0027 (JP)
(72) Inventor: KASHIWABARA, Shigetoshi, Atsugi-shi, Kanagawa 243-0123 (JP); KATADA, Kunio, Atsugi-shi, Kanagawa 243-0123 (JP); HIRAIWA, Shunsuke, Atsugi-shi, Kanagawa 243-0123 (JP); KAWAGUCHI, Akihumi, Yokohama-shi, Kanagawa 221-0023 (JP); NISHIJIMA, Takeo, Yokohama-shi, Kanagawa 221-0023 (JP); SUZUKI, Shinichi, Yokohama-shi, Kanagawa 221-0023 (JP); KATSUMADA, Yasuyuki, Atsugi-shi, Kanagawa 243-0123 (JP); NAKAJIMA, Makoto, Atsugi-shi, Kanagawa 243-0021 (JP); KODAMA, Tokunori, Hiratsuka-shi, Kanagawa 254-0012 (JP); ITO,Masato, Hiratsuka-shi, Kanagawa 254-0012 (JP); IWASA, Aiki, Hiratsuka-shi, Kanagawa 254-0012 (JP)
(74) Representative: Grünecker Patent- und Rechtsanwälte PartG mbB
(86) International application number: PCT/JP2019/015959
(87) International publication number: WO 2019/225203

(56) References cited:
- EP-A1- 1 548 265
- EP-A1- 2 762 552
- WO-A1-2014/061655
- WO-A1-2017/110685
- CN-A- 102 537 103
- JP-A- H0 436 458
- JP-A- 2004 360 707
- JP-A- 2008 019 916
- JP-A- 2010 111 906
- JP-A- 2016 196 922
- US-A1- 2003 159 764
- US-A1- 2003 160 446

## Description

### TECHNICAL FIELD

The present invention relates to a sliding spline shaft device, and more specifically relates to a sliding spline shaft device unlikely to cause stick-slip.

### BACKGROUND ART

A propeller shaft transmits output of an automobile engine to driving wheels. A propeller shaft is, for example, coupled to a transmission at one end and is also coupled to a differential gear at the other end, to transmit engine output to driving wheels.

In general, an engine and a differential gear are suspended to a vehicle body by elastic bodies, such as springs, and a distance between the engine and the differential gear varies due to acceleration and deceleration of an automobile. In view of this, the propeller shaft is provided with a sliding spline shaft device for absorbing the variation in the distance by sliding in an axial direction.

This sliding spline shaft device is required to smoothly slide in the axial direction and thus has a sliding surface that generates low friction force.

However, in the condition in which a dynamic friction force of the sliding surface is low, fast sliding occurs at the moment when stress acting on the sliding surface exceeds a static friction force, and the sliding ceases when the stress becomes low. As a result, the static friction force and the dynamic friction force alternately appear, that is, the so-called "stick-slip" occurs.

Japanese Unexamined Patent Application Publication No. 2013-189569 of Patent Document 1 discloses providing a coating film that contains solid lubricant, to suppress increase in static friction coefficient as well as suppress decrease in dynamic friction coefficient, whereby stick-slip is reduced. Patent Document 2 discloses a manufacturing method of a slide member, in which the slide member is formed by coating an external surface of a substrate with a coat having a coefficient of friction that is lower than that of the external surface of the substrate. The slide member is a spline shaft and the external surface of the substrate does not have a sharp part. Patent Document 3 provides is a spline shaft coupling for a construction machine. Meshing parts of a male spline shaft and a female spline shaft are formed having dimensions that enable the meshing parts to slide against each other, the female spline shaft is fixed to the male spline shaft by a clamp to restrict relative movement thereof during use. A solid lubrication coating is formed on the meshing part of the male spline shaft and/or the female spline shaft. Patent Document 4 discloses sliding parts comprising a nitriding treated layer essentially consisting of iron nitride which is formed by an ion nitriding method on the surface of the metallic base material consisting of an iron system. The solid lubricant layer, such as chemical conversion film of manganese phosphate having 0.5 to 20 µm thickness is provided on the surface of this nitrided layer. Patent Document 5 discloses a retainer is for a self-aligning roller bearing which is manufactured through such processes that a work is processed into the shape of retainer by press working using an SPCC and a nitride layer having a hardness Hv 650 or more is formed at the surface by subjecting the work to a nitriding treatment, followed by a phosphate coating process or a sulphurizing process, and thereby a lubricative coating film is formed having a thickness between 1.0 µm and 10.0 µm. Patent Document 6 discloses a thrust needle roller bearing including a plurality of needle rollers and a cage for retaining the needle rollers in such a way as to allow the rollers to roll freely. The cage has a surface coated with a film of manganese phosphate after being subjected to soft nitriding. Patent Document 7 discloses a method for depositing a film on the surface of a base material composed of a metallic material by a cold spray process. As a raw powder material for film deposition, a powdery mixture at least composed of high carbon steel powder and soft steel powder is used, together with the supersonic flow of a working gas at a temperature lower than the melting point or softening temperature of the raw powder material for film deposition, the raw powder material is made to flow, and is collided at high speed and in a solid phase state against the base material to deposit a film. Patent Document 8 provides a sliding member for sliding with a mating member subjected to hardening treatment, the sliding member including a coating layer containing a binder resin, molybdenum disulfide, and hard substance particles in massive form. Patent Document 9 provides a coupler for engineering machinery, which utilizes highly elastic material and metal material to form engineering machinery having torque delivery surface. Upon the metal side torque delivery surface, a solid lubrication protective film is formed by comprising molybdenum disulfide, graphite, calcium fluoride, or silica. Patent Document 10 discloses a threaded joint for a pipe; also provided is a manufacturing method of said threaded joint for a pipe. This threaded joint for a pipe is provided with a pin and a box. The pin and the box have a contact surface that includes a thread portion and an unthreaded metal contact portion. Disposed on the contact surface of the pin and/or of the box, the threaded joint for a pipe comprises an alloy plating layer of a Zn-Ni alloy, a phosphate film, and a solid lubricant film. The alloy plating layer, the phosphate film and the solid lubricant film are laminated in that order from the contact surface side. Patent Document 11 discloses a threaded joint for steel pipes which comprises a pin and a box each having a contact surface including a threaded portion and an unthreaded metal contact portion. A solid lubricant coating which comprises a lubricating powder such as molybdenum disulfide and a resin binder is formed on the contact surface of at least one of the pin and the box. The coating is formed by applying a coating fluid and drying the applied coating by first stage heating in the temperature range of from 70° C to 150° C and second stage heating in the range of from higher than 150° C to 380° C. Patent Document 12 relates to a threaded joint for steel pipes which comprises a pin and a box each having a contact surface including a threaded portion and an unthreaded metal contact portion. A solid lubricating coating comprising a lubricating powder (e.g., molybdenum disulfide) and an organic or inorganic binder is formed on the contact surface of at least one of the pin and the box. The proportion of area of a cross section along the thickness of the solid lubricating coating which is occupied by secondary particles of the lubricating powder having an equivalent circular diameter of 15-60 mum is from 5-90%. Alternatively, the solid lubricating coating comprises, in addition to the lubricating powder, a fibrous filler (e.g., inorganic whiskers) in such an amount that the mass ratio of the fibrous filler to the binder is 0.01-0.5. Patent Document 13 discloses a piston ring for internal combustion engines that has a coating film comprising a heat-resistant material and a solid lubricant dispersed therein on at least one side surface, the heat-resistant material comprising at least one of a polyamideimide-silicon dioxide hybrid material and a polyimide-silicon dioxide hybrid material.

### CITATION LIST

### Patent document

Patent Document 1: JP2013-189569A
Patent Document 2: JP2016-196922A
Patent Document 3: WO 2014/061655 A
Patent Document 4: JP H04 36458A
Patent Document 5: JP2004-360707A
Patent Document 6: JP2008-019916A
Patent Document 7: JP2010-111906A
Patent Document 8: EP 2762552 A1
Patent Document 9: CN 102537103 A
Patent Document 10: WO 2017/110685 A1
Patent Document 11: US 2003/159764 A1
Patent Document 12: US 2003/160446 A1
Patent Document 13: EP 1548265 A1

### SUMMARY OF INVENTION

### Technical Problem

However, when torque acting on the sliding spline shaft device increases, the static friction force increases, whereby the difference between the static friction force and the dynamic friction force increases, resulting in generation of large vibration due to stick-slip.

The present invention has been made in view of such a problem of conventional art, and an object of the present invention is to provide a sliding spline shaft device that suppresses generation of vibration due to stick-slip even when a large torque is applied.

### Solution to Problem

The inventors of the present invention have made an intensive research to achieve the above object and have found the following findings. That is, the above object can be achieved by increasing hardness of a surface of a base material to reduce microscopic deformation of a sliding surface and thereby suppressing increase in real contact area. Thus, the present invention has been completed.

Specifically, a sliding spline shaft device of the present invention includes a male spline and a female spline that is fitted to the male spline in an axially slidable manner, and at least one of the splines has a surface processed layer.
The surface processed layer includes an undercoat layer formed by nitriding, an intermediate layer containing phosphate, and a topcoat layer containing solid lubricant, in this order; and the undercoat layer includes a diffusion layer in which nitrogen is diffused in the base material and a compound layer containing an iron nitride in this order from the base material side; and the compound layer is columnar crystals containing Fe₂₋₃N and Fe₄N; and the compound layer is formed by a salt-bath nitrocarburizing method, and the compound layer is porous. The undercoat layer contains iron nitride and/or iron carbide.

### Advantageous Effects of Invention

In the present invention, the surface hardness of the base material of the spline is increased to reduce microscopic deformation of the sliding surface. Thus, the present invention provides a sliding spline shaft device that is unlikely to cause stick-slip even when a large torque is applied.

### BRIEF DESCRIPTION OF DRAWINGS

FIG. 1 is an axial direction cross-sectional view of a sliding spline shaft device.
FIG. 2 is a cross-sectional view illustrating a layer structure of a surface processed layer.
FIG. 3 illustrates a cross-sectional SEM image of a surface processed layer of Example 1.
FIG. 4 is a graph illustrating variation in dynamic sliding force relative to an applied load of each of Example 1 and Comparative Example 1.
FIG. 5 is a graph illustrating variation in static sliding force relative to an applied load of each of Example 1 and Comparative Example 1.
FIG. 6 is a graph illustrating variation in difference between a static sliding force and a dynamic sliding force relative to an applied load of each of Example 1 and Comparative Example 1.
FIG. 7 is a graph illustrating variation in friction coefficient relative to repetition times (durability) of Example 1.
FIG. 8 is a graph illustrating variation in friction coefficient relative to repetition times (durability) of Comparative Example 1.

### DESCRIPTION OF EMBODIMENTS

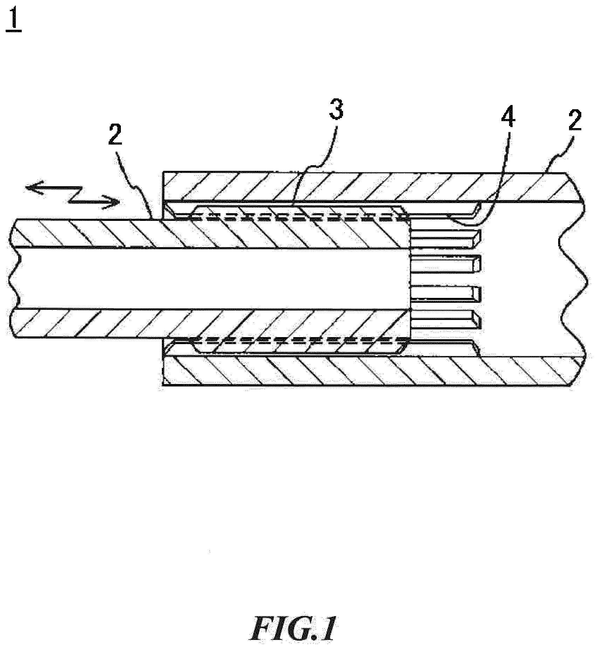

A sliding spline shaft device of the present invention will be described in detail. As illustrated in FIG. 1, the sliding spline shaft device includes a male spline and a female spline that is fitted to the male spline in an axially slidable manner, and at least one of the splines has a surface processed layer.

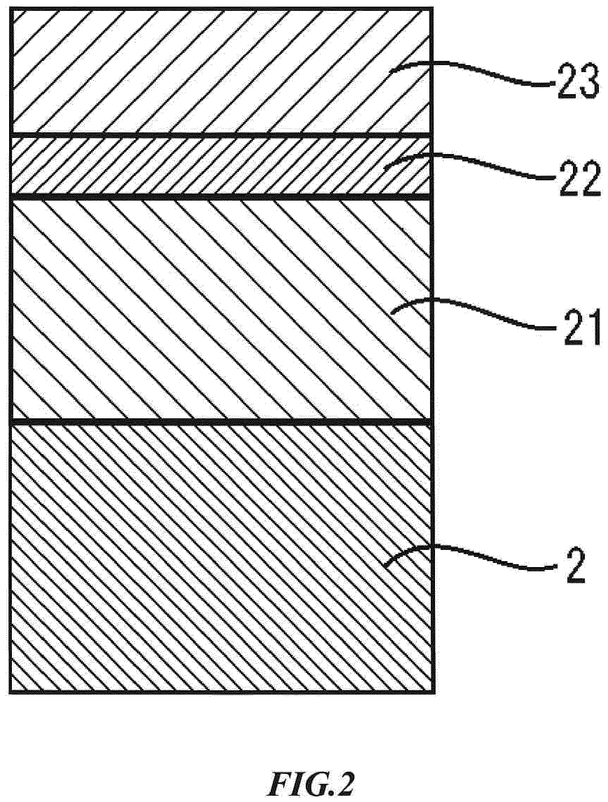

As illustrated in FIG. 2, the surface layer includes an undercoat layer, an intermediate layer containing phosphate, and a topcoat layer containing solid lubricant, in this order, from a base material side.

### Undercoat Layer

The undercoat layer contains iron nitride and/or iron carbide and hardens the surface of the base material.

The undercoat layer preferably has Vickers hardness (HV) of 500 HV0.1 or greater. The undercoat layer, which has Vickers hardness of 500 HV0.1 or greater, suppresses microscopic deformation of the sliding surface and thereby prevents increase in static friction coefficient due to stress.

The upper limit of Vickers hardness (HV) is not specifically limited, but the practical upper limit of hardness is 900 HV0.1 or less in a case of hardening the base material to be used in the sliding spline shaft device.
Note that Vickers hardness (HV) can be measured in accordance with JIS Z 2244. In addition, the numerical value that is suffixed to "HV" represents a load in measurement of Vickers hardness, in unit of kg. That is, "HV0.1" represents a measurement under a load of 0.1 kg.

The undercoat layer is formed by nitriding. An undercoat layer that is formed by nitriding has high tempering resistance and is thereby not prone to cause decrease in surface hardness in forming the intermediate layer, which will be described later.

Examples of a method of the nitriding include a salt-bath nitrocarburizing method, a gas nitrocarburizing method, and an ion nitriding method. These nitriding treatments enable forming an undercoat layer at a temperature of an A1 transformation point of the base material or less, whereby strain deformation of the base material is suppressed.

The undercoat layer that is formed by nitriding has a diffusion layer and a compound layer, in this order, from the base material side. The diffusion layer is a layer, in which nitrogen is diffused in the base material. The compound layer is columnar crystals containing Fe₂₋₃N and Fe₄N.

Among them, a compound layer that is formed by a salt-bath nitrocarburizing method is porous and improves peeling resistance of the intermediate layer (described later) by an anchoring effect, more than a compound layer that is formed by an ion nitriding method or a gas nitrocarburizing method. Moreover, this compound layer is well lubricated with lubricating oil even when lubricating layers, e.g., the intermediate layer and the topcoat layer, are worn out, and thus, this compound layer improves wear resistance.

The thickness of the compound layer is preferably 5 µm or greater and 15 µm or less. When the compound layer is very thin, deformation of the sliding surface may not be sufficiently suppressed. When the compound layer is very thick, the compound layer is embrittled, and a static friction force may increase.

The diffusion layer is a layer in which nitrogen is diffused in a sorbite structure of the base material to generate nitrides, such as Al-N, Cr-N, and Mo-N. The nitrides generate strain in the crystal lattice of Fe and hardens the surface of the base material.

The diffusion layer has high affinities with the base material and the compound layer and prevents peeling off of the compound layer as well as improves fatigue strength of the base material.

In a case in which the surface hardness of the base material is sufficiently high, it is not necessary to form the undercoat layer to each of the male spline and the female spline, and the undercoat layer may be formed only to the spline that has a base material with a lower surface hardness.

### Intermediate Layer

The intermediate layer contains phosphate and improves wear resistance as well as adhesion of the topcoat layer, which will be described later.

The intermediate layer can be formed by phosphating. Examples of the phosphating include a zinc phosphate treatment, a manganese phosphate treatment, and a calcium phosphate treatment. Among them, the manganese phosphate treatment is preferable for forming the intermediate layer.

A manganese phosphate crystal that is formed by a manganese phosphate treatment tends to be larger than crystals that are formed by other phosphate treatments, and the manganese phosphate crystal forms an intermediate layer having a high maximum height (Ry). Thus, the manganese phosphate crystal improves peeling resistance of the topcoat layer by an anchoring effect. The topcoat layer will be described later.

Moreover, manganese phosphate makes the sliding surface smooth due to self-sacrificial wear and reduces surface pressure, thereby improving wear resistance.

The film thickness of the intermediate layer is preferably 1 µm or greater and 5 µm or less.
When the film thickness is less than 1 µm, wear resistance may not be sufficiently improved. On the other hand, when the film thickness exceeds 5 µm, due to the intermediate layer that is softer than the undercoat layer, a real contact area may increase to cause increase in static friction force when a large torque is applied to the sliding surface.

### Topcoat Layer

The topcoat layer contains solid lubricant and binder resin and reduces a dynamic friction force even when a large torque is applied to the sliding surface and breaks an oil film, and a mixed lubrication state or a boundary lubrication state occurs.

The solid lubricant may use inorganic fine particles or organic fine particles. Examples of the inorganic fine particles include inorganic fine particles of metal sulfides, e.g., molybdenum disulfide, graphite, carbon black, boron nitride, and metal oxides. On the other hand, examples of the organic fine particles include organic fine particles of fluororesin, polyolefin, and polyamide. These materials may be used alone or in combination.

Among them, the molybdenum disulfide particles and the graphene particles have lamellar structures in which thin pieces are laminated on one after another, and therefore, they have high load bearing performances and decrease a dynamic friction force by being dislocated in a certain direction when receiving a load. Thus, molybdenum disulfide particles and graphene particles are preferably used.

An average particle size (Fisher method) of the solid lubricant is preferably 0.3 µm or greater and 3 µm or less. In the condition in which the solid lubricant has particle sizes in the above range, a topcoat layer with a thin film thickness can be formed.

The amount of the solid lubricant in the topcoat layer is preferably 15 mass % or greater and 45 mass % or less.

Examples of the binder resin include polyamide-imide resin, polyphenylene sulfide resin, epoxy resin, phenol resin, and modified resins thereof. Among them, the polyamide-imide resin and the modified resin thereof have superior wear resistance and are thus preferably used.

The topcoat layer can be formed, for example, by applying polyamic acid solution that contains solid lubricant, drying it to remove solvent, and performing imidization reaction.

Any solvent in which polyimide dissolves without generating a gel product and a precipitate, can be used as the solvent of the polyimide solution. For example, organic polar solvent, such as formamide solvent, acetamide solvent, and pyrrolidone solvent, may be used. These solvents may be used alone or several types of the solvents may be used as a mixed solvent.

The polyamic acid solution may further contain an additive, such as surface active agent or anti-settling additive. Surface active agent that is added, uniformly disperses the solid lubricant in the polyamic acid solution and maintains the dispersed state.

The film thickness of the topcoat layer is preferably 1 µm or greater and 15 µm or less and more preferably 1 µm or greater and 9 µm or less.
When the film thickness is less than 1 µm, a dynamic friction force may not be sufficiently reduced. On the other hand, when the film thickness exceeds 15 µm, due to the topcoat layer that is softer than the undercoat layer, a real contact area may increase to cause increase in static friction force when a large torque is applied to the sliding surface.

Moreover, an average of the total film thickness of the intermediate layer and the topcoat layer is preferably 20 µm or less, more preferably, 15 µm or less, and further preferably, 10 µm or less.

When the total film thickness of the intermediate layer and the topcoat layer is 20 µm or less, minute deformation of the sliding surface is suppressed in conjunction with the undercoat layer, whereby increase in static friction force is suppressed even when a large torque is applied to the sliding surface.

The film thicknesses of the topcoat layer, the intermediate layer, and the undercoat layer can be measured by analyzing a cross-sectional SEM image of the surface processed layer.
In the present invention, a film thickness at an intermediate point on a waveform-shaped inclined surface of the spline is measured at ten positions, and the results are averaged to obtain an average film thickness.

### Base Material

The base material may use a steel material that is conventionally used for a sliding spline.

Specifically, it is possible to use a carbon steel containing 0.18 mass % or greater and 0.48 mass % or less of carbon (C), 0.15 mass % or greater and 0.35 mass % or less of silicon (Si), and 0.60 mass % or greater and 0.90 mass % or less of manganese (Mn).

### EXAMPLES

The present invention will be detailed with reference to Examples hereinafter, but the present invention is not limited to Examples described below.

### Example 1

### (Formation of Undercoat Layer)

An S45C flat test piece (female spline, hardness: 260 HV0.1) and an Scr420H columnar test (male spline, 6 mm in diameter and 12 mm in height, hardness: 650 HV0.1) were degreased and washed by alkali solution and were dried, and they were preheated to approximately 350 °C and were then immersed in a molten salt bath at 570 °C for 90 minutes to be subjected to salt-bath nitrocarburizing (ISONITE (registered trademark) treatment, manufactured by Nihon Parkerizing Co., Ltd. ).

Each of these test pieces was then taken out of the bath, cooled at a room temperature, and washed by water. Thus, an undercoat layer including a compound layer that had a film thickness of 9 µm, was formed.

The surface hardness (HV) of the S45C female spline test piece was 650 HV0.1, and the surface hardness (HV) of the Scr420H male spline test piece was 800 HV0.1.

### (Formation of Intermediate Layer)

Each of the test pieces that were formed with the undercoat layer was immersed in a manganese phosphate treatment liquid ("PALFOS M1A", manufactured by Nihon Parkerizing Co., Ltd. ) at approximately 100 °C for 10 minutes, washed, and then dried, whereby an intermediate layer with a film thickness of 2 µm was formed.

### (Formation of Topcoat Layer)

Each of the test pieces that were formed with the intermediate layer was coated with a molybdenum disulfide solid lubricant coating material ("Defric Coat", HMB-2H2, manufactured by Kawamura Research Lab., Inc. ) by spraying and was dried at 180 °C for 30 minutes under nitrogen atmosphere, whereby solvent was removed.

Thereafter, each of the test pieces was heated at 250 °C for 2 hours, whereby polyamide-imide resin containing molybdenum disulfide formed a topcoat layer having a thickness of 7 µm. Thus, test pieces of a sliding spline device were prepared.

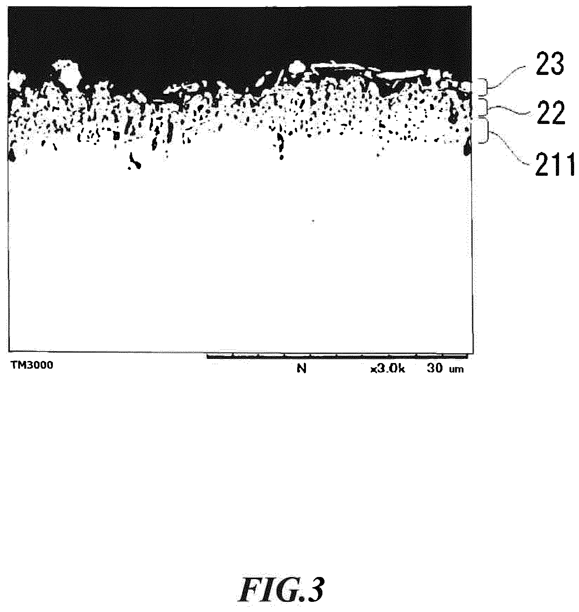

A cross-sectional SEM image of the test piece is illustrated in FIG. 3.

### Example 2

A test piece of the sliding spline device was prepared in the same manner as in Example 1, except for forming a topcoat layer having a film thickness of 13.5 µm.

### Comparative Example 1

A test piece of the sliding spline device was prepared in the same manner as in Example 2, except for not forming an undercoat layer.

### Evaluation

### (Measurement of Sliding Force)

Static friction force and dynamic friction force were measured with respect to each varied load in the condition in which a reciprocation frequency of 3 Hz and an amplitude of 2.2 mm, by using a high-speed reciprocating friction test apparatus (PLINT TE77).

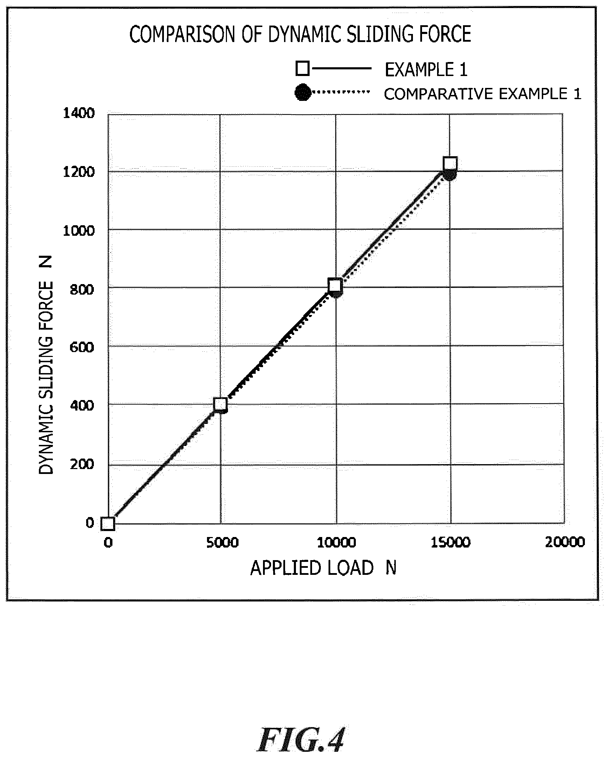

Measurement results of dynamic sliding force, measurement results of static sliding force, and a difference between the static sliding force and the dynamic sliding force, are illustrated in FIGs. 4, 5, and 6, respectively.

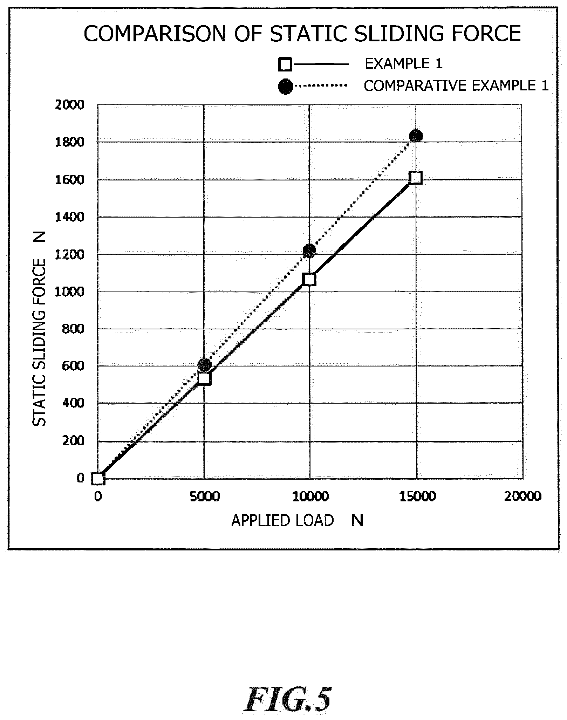

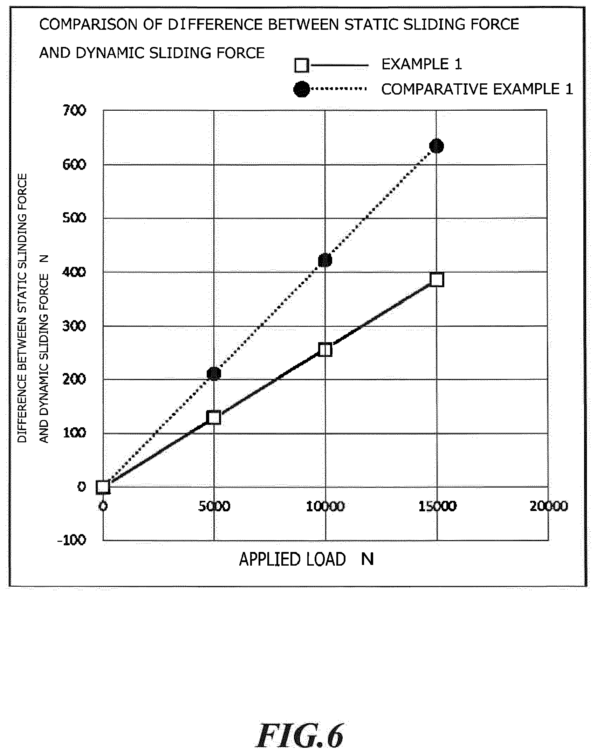

As illustrated in FIGs. 4 and 5, the test pieces of Example 1 and the test piece of Comparative Example 1, both of which had the topcoat layer, exhibited no large difference in dynamic sliding force therebetween. However, forming the undercoat layer decreased the static sliding force.
Moreover, as illustrated by the graph of the difference between the static sliding force and the dynamic sliding force in FIG. 6, Example 1, which was formed with the undercoat layer, exhibited a small gradient, and Example 1 prevented occurrence of stick-slip even when the applied load was increased.

Furthermore, static friction coefficient and dynamic friction coefficient of each of Examples 1 and 2 were measured.

The measurement results are illustrated in Table 1.

**Table 1**

| | Example 1 | Example 2 |
|---|---|---|
| Static Friction Coefficient (µs) | 0.108 | 0.130 |
| Dynamic Friction Coefficient (µd) | 0.100 | 0.090 |
| µs - µd | 0.008 | 0.040 |

The result of Table 1 shows that Example 1, which had the topcoat layer with the film thickness of 7 µm, had smaller static friction coefficient than Example 2, which had the topcoat layer with the film thickness of 13.5 µm, and stick-slip can be prevented, because the ratio of the static sliding force and the dynamic sliding force is small.

### (Durability Test)

Durability test was performed by sliding repeatedly under a fixed load of 100 N in the condition in which a reciprocation frequency of 3 Hz and an amplitude of 2.2 mm, by using the high-speed reciprocating friction test apparatus (PLINT TE77).

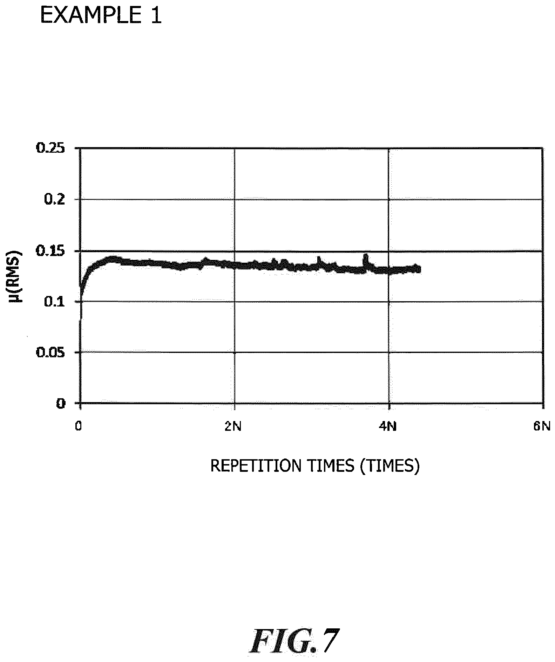

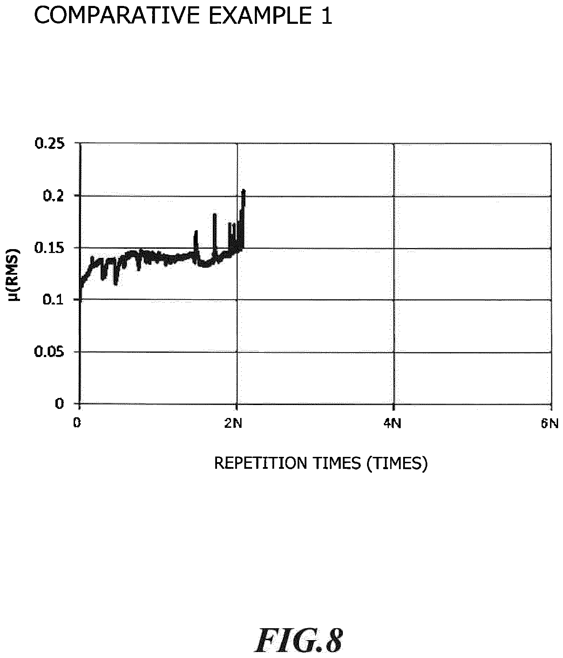

The test result of Example 1 is illustrated in FIG. 7, and the test result of Comparative Example 1 is illustrated in FIG. 8.

A comparison between the graph in FIG. 7 and the graph in FIG. 8 shows that Example 1, which was formed with the undercoat layer, exhibited a small amplitude from an initial stage of sliding and suppressed occurrence of stick-slip. In addition, the friction force did not increase although sliding was repeated for a long time, and Example 1 was superior in durability.
The reason for this is that minute deformation of the sliding surface is suppressed, the topcoat layer and the intermediate layer are not prone to wear, and furthermore, the undercoat layer is hard such that the base metal in the base material is unlikely to be exposed even when the topcoat layer and the intermediate layer are worn out.

Table 1 and FIG. 7 show that performing both of formation of the undercoat layer and making the topcoat layer have a thickness of 9 µm or less, enables suppressing stick-slip and obtaining durability at further high levels.

### REFERENCE SIGNS LIST

- 1: Sliding spline shaft device
- 2: Base material
- 21: Undercoat layer
- 211: Compound layer
- 22: Intermediate layer
- 23: Topcoat layer
- 3: Male spline
- 4: Female spline

## Claims

1. A sliding spline shaft device (1) for an automobile comprising a male spline (3) and
a female spline (4) that is fitted to the male spline (3) in an axially slidable manner,
wherein
at least one of the splines has a surface processed layer;
the surface processed layer includes,
an undercoat layer (21) formed by nitriding,
an intermediate layer (22) containing a phosphate, and
a topcoat layer (23) containing a solid lubricant and a binder resin, in this order;
**characterised in that**
the undercoat layer (23) includes a diffusion layer in which nitrogen is diffused in the base material (2) and a compound layer (211) containing an iron nitride in this order from the base material side,
the compound layer (211) is columnar crystals containing Fe₂₋₃N and Fe₄N,
the compound layer (211) is formed by a salt-bath nitrocarburizing method, and the compound layer is porous.

2. The sliding spline shaft device (1) for an automobile according to claim 1, wherein the undercoat layer (21) has Vickers hardness (HV) of 500 HV0.1 or greater.

3. The sliding spline shaft device (1) for an automobile according to claim 1 or 2, wherein the undercoat layer (21) is formed only to one of the male spline (3) and the female spline (4), the one has a base material (2) with a lower surface hardness than the other one.

4. The sliding spline shaft device (1) for an automobile according to any one of claims 1 to 3, wherein a total average film thickness of the intermediate layer (22) and the topcoat layer (23) is 20 µm or less.

5. The sliding spline shaft device (1) for an automobile according to any one of claims 1 to 4, wherein the solid lubricant contains at least one of molybdenum disulfide particles or graphite particles and its average film thickness is 1 µm or greater and 15 µm or less.

6. The sliding spline shaft device (1) for an automobile according to any one of claims 1 to 5, wherein the intermediate layer (22) contains manganese phosphate and has a film thickness of 1 µm or greater and 5 µm or less.

7. The sliding spline shaft device (1) for an automobile according to any one of claims 1 to 6, wherein the the compound layer (211) has an average film thickness of 5 µm or greater and 15 µm or less.

8. The sliding spline shaft device (1) for an automobile according to any one of claims 1 to 7, wherein the base material (2) is a carbon steel that contains, at least, 0.18 mass % or greater and 0.48 mass % or less of carbon (C), 0.15 mass % or greater and 0.35 mass % or less of silicon (Si), and 0.60 mass % or greater and 0.90 mass % or less of manganese (Mn).

## Patentansprüche

1. Gleitende Keilwellenvorrichtung (1) für ein Kraftfahrzeug, die eine Außenverzahnung (3) und eine Innenverzahnung (4) umfasst, die axial verschiebbar auf die Außenverzahnung (3) aufgepasst ist, wobei
wenigstens eine der Verzahnungen eine oberflächenbearbeitete Schicht aufweist;
die oberflächenbearbeitete Schicht einschließt:
eine Grundierungsschicht (21), die mittels Nitrieren ausgebildet wird,
eine Zwischenschicht (22), die ein Phosphat enthält, sowie
eine Deckschicht (23), die einen festen Schmierstoff und ein Bindemittelharz in dieser Reihenfolge enthält;
**dadurch gekennzeichnet, dass**
die Grundierungsschicht (23) eine Diffusionsschicht, in der Stickstoff in dem Grundmaterial (2) diffundiert ist, sowie eine Verbundschicht (211), die ein Eisennitrid enthält, in dieser Reihenfolge von der Seite des Grundmaterials aus einschließt,
die Verbundschicht (211) aus säulenförmigen Kristallen besteht, die Fe₂₋₃N und Fe₄N enthalten,
die Verbundschicht (211) mittels eines Salzbad-Karbonitrierverfahrens ausgebildet wird, und die Verbundschicht porös ist.

2. Gleitende Keilwellenvorrichtung (1) für ein Kraftfahrzeug nach Anspruch 1, wobei die Grundierungsschicht (21) eine Vickershärte (HV) von 500 HV0,1 oder mehr hat.

3. Gleitende Keilwellenvorrichtung (1) für ein Kraftfahrzeug nach Anspruch 1 oder 2, wobei die Grundierungsschicht (21) nur an der Außenverzahnung (3) oder der Innenverzahnung (4) ausgebildet ist, und die eine betreffende Verzahnung ein Grundmaterial (2) mit einer geringeren Oberflächenhärte als die in andere Verzahnung aufweist.

4. Gleitende Keilwellenvorrichtung (1) für ein Kraftfahrzeug nach einem der Ansprüche 1 bis 3, wobei die durchschnittliche Gesamt-Schichtdicke der Zwischenschicht (22) und der Deckschicht (23) 20 µm oder weniger beträgt.

5. Gleitende Keilwellenvorrichtung (1) für ein Kraftfahrzeug nach einem der Ansprüche 1 bis 4, wobei der feste Schmierstoff Molybdändisulfid-Teilchen oder/und Graphit-Teilchen enthält und seine durchschnittliche Schichtdicke 1 µm oder mehr und 15 µm oder weniger beträgt.

6. Gleitende Keilwellenvorrichtung (1) für ein Kraftfahrzeug nach einem der Ansprüche 1 bis 5, wobei die Zwischenschicht (22) Manganphosphat enthält und eine Schichtdicke von 1 µm oder mehr und 5 µm oder weniger hat.

7. Gleitende Keilwellenvorrichtung (1) für ein Kraftfahrzeug nach einem der Ansprüche 1 bis 6, wobei die Verbundschicht (211) eine durchschnittliche Schichtdicke von 5 µm oder mehr und 15 µm oder weniger hat.

8. Gleitende Keilwellenvorrichtung (1) für ein Kraftfahrzeug nach einem der Ansprüche 1 bis 7, wobei das Grundmaterial (2) ein Kohlenstoffstahl ist, der wenigstens 0,18 Masse-% oder mehr und 0,48 Masse-% oder weniger Kohlenstoff (C), 0,15 Masse-% oder mehr und 0,35 Masse-% oder weniger Silizium (Si) sowie 0,60 Masse-% oder mehr und 0,90 Masse-% oder weniger Mangan (Mn) enthält.

## Revendications

1. Dispositif arbre cannelé coulissant (1) pour automobile comprenant une cannelure mâle (3) et une cannelure femelle (4) qui s'adapte sur la cannelure mâle (3) de manière à coulisser axialement, dans lequel
au moins une des cannelures comporte une couche traitée en surface ;
la couche traitée en surface comprend,
une sous-couche (21) formée par nitruration,
une couche intermédiaire (22) contenant un phosphate, et
une couche supérieure de finition (23) contenant un lubrifiant solide et une résine liante, dans cet ordre ;
**caractérisé en ce que**
la couche supérieure de finition (23) comprend une couche de diffusion dans laquelle de l'azote est diffusé dans le matériau de base (2) et une couche composite (211) contenant un nitrure de fer dans cet ordre depuis le côté matériau de base,
la couche composite (211) consiste en cristaux colonnaires contenant Fe₂₋₃N et Fe₄N,
la couche composite (211) est formée par une méthode de nitrocarburation en bain de sels, et la couche composite est poreuse.

2. Dispositif arbre cannelé coulissant (1) pour automobile selon la revendication 1, dans lequel la sous-couche (21) présente une dureté Vickers (HV) de 500 HVO,1 ou plus.

3. Dispositif arbre cannelé coulissant (1) pour automobile selon la revendication 1 ou 2, dans lequel la sous-couche (21) est formée uniquement sur une des cannelures parmi la cannelure mâle (3) et la cannelure femelle (4), l'une ayant un matériau de base (2) présentant une dureté de surface inférieure à celle de l'autre.

4. Dispositif arbre cannelé coulissant (1) pour automobile selon l'une quelconque des revendications 1 à 3, dans lequel une épaisseur de film moyenne totale de la couche intermédiaire (22) et de la couche supérieure de finition (23) est de 20 µm ou moins.

5. Dispositif arbre cannelé coulissant (1) pour automobile selon l'une quelconque des revendications 1 à 4, dans lequel le lubrifiant solide contient des particules de disulfure de molybdène et/ou des particules de graphite et son épaisseur de film moyenne est de 1 µm ou plus et de 15 µm ou moins.

6. Dispositif arbre cannelé coulissant (1) pour automobile selon l'une quelconque des revendications 1 à 5, dans lequel la couche intermédiaire (22) contient du phosphate de manganèse et présente une épaisseur de film de 1 µm ou plus et de 5 µm ou moins.

7. Dispositif arbre cannelé coulissant (1) pour automobile selon l'une quelconque des revendications 1 à 6, dans lequel la la couche composite (211) présente une épaisseur de film moyenne de 5 µm ou plus et de 15 µm ou moins.

8. Dispositif arbre cannelé coulissant (1) pour automobile selon l'une quelconque des revendications 1 à 7, dans lequel le matériau de base (2) est un acier au carbone qui contient, au moins, 0,18 % en masse ou plus et 0,48 % en masse ou moins de carbone (C), 0,15 % en masse ou plus et 0,35 % en masse ou moins de silicium (Si), et 0,60 % en masse ou plus et 0,90 % en masse ou moins de manganèse (Mn).
